# EUROPEAN PATENT SPECIFICATION

(11) **EP 3 562 359 B1**
(45) Date of publication and mention of the grant of the patent: **23.12.2020**
(21) Application number: 17803960.8
(22) Date of filing: 24.11.2017
(51) Int. Cl.: A47J 31/40, A47J 31/46

(54) **COLD BEVERAGES PREPARATION MACHINE**
AUSSCHANKVORRICHTUNG FÜR KALTE GETRÄNKE
DISTRIBUTEUR DE BOISSONS FROIDES

(30) Priority: 29.12.2016 EP 16207269; 02.10.2017 EP 17194376
(43) Date of publication of application: 06.11.2019
(73) Proprietor: Société des Produits Nestlé S.A., 1800 Vevey (CH)
(72) Inventor: FERRAND, Mickael, 1807 Blonay (CH); CALDERONE, Roberto Angelo, 1170 Aubonne (CH); MARET, Charlotte, 01220 Divonne les Bains (FR); DEMIERRE, Jonathan, 8005 Zürich (CH); CADUFF, Marco, 8048 Zürich (CH); PINDJUROV, Riste, 1740 Neyruz (CH); REUST, Alexis, 1010 Lausanne (CH)
(74) Representative: Ducreux, Marie
(86) International application number: PCT/EP2017/080361
(87) International publication number: WO 2018/121944

(56) References cited:
- EP-A1- 2 478 803
- WO-A1-2015/127654
- US-A1- 2011 045 152
- US-A1- 2015 272 382

## Description

### Field of the invention

The present invention relates to beverage beverage preparation machines preparing cold beverages from a soluble beverage powder.

### Background of the invention

Many beverages like espresso and other coffee beverages, milk beverages, chocolate beverages are often prepared by mixing a beverage soluble powder or a beverage concentrate with a diluent, usually water. Mixing devices are known for speedier preparation of such beverages by mixing the beverage component with diluent. These devices typically comprise a mixing chamber in which the beverage component and diluent are fed. The diluent is usually introduced into an upper dissolution chamber in order to create a whirlpool of diluent to initiate dissolution of the beverage component. The mixture is then usually frothed by a whipper in a bottom whipping chamber to fully reconstitute the beverage and eventually produce foam. The beverage is then usually evacuated from the whipping chamber through the bottom of the chamber and dispensed into a receptacle for drinking. Today there is an increasing demand of the customers for cold beverages. Yet the dissolution of soluble powders with cold diluent inside whipping chambers can be difficult, especially for powders comprising powdered sugar and/or fat components. Actually in the final cold beverages, sugar is dissolved partially only, lumps of powder are present, taste is not optimal due to inefficient reconstitution of the beverage or too long whipping to get the correct reconstitution. A beverage machine according to the preamble of claim 1 is known from US2015/272382.

An object of the invention is to address the problem of preparing cold beverages from soluble powders, in particular comprising sugar and/or fat, in a whipping chamber.

It would be advantageous to provide a beverage preparation machine enabling the dispensing of several cold beverages one after the other without having to wait for a long preparation time between each beverage.

### Summary of the invention

In a first aspect of the invention, there is provided a beverage preparation machine configured for preparing cold beverages from soluble beverage ingredient and water, said machine comprising :
- a cold generation unit for supplying a cooling fluid, and
- at least one beverage preparation unit comprising :
   - a beverage mixing chamber configured for mixing a soluble beverage ingredient and hot water to produce a hot beverage, said chamber comprising a mixing impeller, and
   - a heat exchanger unit configured for exchanging heat between the hot beverage produced by the beverage mixing chamber and the cooling fluid supplied by the cold generation unit, and
   - a beverage circuit comprising the heat exchanger unit and the beverage mixing chamber, said circuit being designed to enable the circulation of the beverage in a loop between said beverage mixing chamber and said heat exchanger unit and said circuit comprising a pump for circulating the beverage in said beverage circuit, and
   - a circulating means adapted for enabling circulation of the beverage in the closed loop between the beverage mixing chamber and the heat exchanger unit, and
   - a dispensing means adapted for enabling dispensing of the beverage from the beverage circuit though a beverage dispensing outlet.

The machine comprises at least one beverage mixing chamber designed for mixing a dose of soluble beverage ingredient and a corresponding volume of hot water. The dose and the volume are set to get the final desired beverage.
Due to the use of hot water in the beverage mixing chamber, the beverage ingredient can be completely dissolved in the diluent since sugar and fats melt in hot water. The hot water can present a temperature of at least 40°C, preferably at least 60°C, to avoid any dissolution problem of the beverage ingredient.

The machine comprises a cold generation unit for supplying a cooling fluid and a heat exchanger unit configured for exchanging heat between the hot beverage produced in the beverage mixing chamber and the cooling fluid supplied by the cold generation unit. Accordingly the hot beverage produced in the mixing chamber can be cooled at the desired cold temperature.
Any known chiller technology can be used to provide a cooling fluid.
According to one preferred embodiment, the cold generation unit comprises a tank of cooling liquid. Accordingly, this tank provides an important quantity of cooling liquid at low temperature enabling the rapid cooling of a hot beverage or the successive cooling operations of several hot beverages or the cooling of several beverages simultaneously. Preferably this cooling liquid can be propylene glycol. Such a liquid can reach a temperature of -25°C and rapidly cool the hot beverage through heat exchange.

The machine comprises a beverage circuit comprising the heat exchanger unit and the beverage mixing chamber. After the first step of production of the hot beverage, this circuit enables, the production of the cold beverage from the hot prepared beverage in a further second step.
The circuit is designed to enable the circulation of the beverage in a loop between the heat exchanger unit and the beverage mixing chamber. The circulation enables a fast cooling compared to a static heat exchange.
The circuit comprises a pump for circulating the beverage in the beverage circuit.
Accordingly, the hot beverage to be cooled is forced to circulate in the circuit between the heat exchanger unit and the beverage mixing chamber and the cooling of the beverage is accelerated. Moreover, if the dissolution of the beverage ingredient is not fully completed, it can be achieved during circulation due to the agitation generated by the circulation.

Preferably, the mixing impeller of the beverage mixing chamber is the pump for circulating the beverage in the beverage circuit.
More precisely, the mixing impeller can be a centrifugal pump positioned at the bottom of the mixing chamber. This centrifugal pump provides two functions.
The first function is the circulation of the beverage ingredient and hot water in the beverage circuit. This function of circulation is effective if the centrifugal pump is rotated in the pumping direction.
The second function is the agitation of the mixture of beverage ingredient and hot water in the mixing chamber. Depending on the design of the pump rotor, generally the blades designed on the rotor, this second function can be obtained during the rotation of the centrifugal pump in the pumping direction, meaning that the pump simultaneously pumps and agitates. Alternatively, this second function can be obtained by rotating the centrifugal pump in the direction opposed to the pumping direction ; in that case, the rotor of the pump agitates only the mixture of beverage ingredient and hot water but does not pump this mixture. Depending on the configuration of the machine, the agitation can be improved too by actuating valve means to close the outlet of the mixing chamber.
Usually the mixing chamber comprises a beverage outlet oriented perpendicularly to the axis of rotation of the centrifugal pump, and the bottom of the body of the chamber is designed to form the casing of the centrifugal pump and to surround the impeller of the centrifugal pump.

According to one embodiment, the rotating axis of the centrifugal pump is oriented along the longitudinal axis of the chamber. This longitudinal axis of the chamber is generally vertically. According to said first embodiment, the beverage mixing chamber can comprise an additional impeller attached to the shaft of the motor actuating the centrifugal pump, said additional impeller being positioned inside the mixing chamber but outside the casing of the centrifugal pump. This additional impeller provides additional agitation of the mixture of beverage ingredient and hot water in the mixing chamber and improves dissolution. This impeller provides agitation of the beverage whatever the direction of rotation of the rotating axis of the pump.

According to another embodiment, the rotating axis of the centrifugal pump is oriented perpendicularly to the longitudinal axis of the chamber. As this longitudinal axis of the chamber is generally vertically, it means that the rotating axis of the centrifugal pump is oriented horizontally.

The beverage preparation machine comprises :
- a circulating means adapted for enabling circulation of the beverage in a loop between the beverage mixing chamber and the heat exchanger unit, and
- a dispensing means adapted for enabling dispensing of the beverage from the beverage circuit though a beverage dispensing outlet.

According to the first embodiment of the machine :
- the circulating means is a first valve, said first valve being positioned close to the bottom of the beverage mixing chamber, and
- the dispensing means is a second valve, said second valve being positioned close to the bottom of the heat exchanger unit.
Usually, the first valve enables either the mixing of the beverage ingredient with hot water when it is closed or the circulation of the hot beverage when it is opened.
The second valve means enables the dispensing of the cold beverage from the beverage circuit. Usually, this second valve is positioned at the lowest point of the circuit.
According to one specific embodiment, both above described valve means can be combined in one single three way valve. Preferably, this three way valve is positioned close to the bottom of the heat exchanger unit.

According to the second embodiment of the machine, the circulating means and the dispensing means can form an assembly, said assembly consisting in a selective orienting fluid path at the beverage outlet of the heat exchanger unit, said path being designed to guide the beverage either to the beverage mixing chamber or to the beverage outlet depending on the velocity of the beverage.
The selective orienting fluid path is designed so that, when the velocity of the beverage is high, the beverage is guided to the mixing chamber and is recirculated, whereas, when the velocity of the beverage is low, the beverage is guided to the beverage dispensing outlet of the beverage preparation unit.
This second embodiment presents the advantage of avoiding the use of any valve and decreasing the manufacturing costs of the machine.

According to a specific implementation of the second embodiment, the selective orienting fluid path comprises :
- a beverage inlet connected to the outlet of the heat exchanger unit,
- a first beverage outlet connected to the wall of the mixing chamber, preferably close to the top of the mixing chamber, said first beverage outlet facing the beverage inlet,
- a recess extending downwardly under the space between the beverage inlet and the first beverage outlet
- a second beverage outlet positioned at the bottom of said recess and connected to the beverage dispensing outlet.

Generally, the heat exchanger of the beverage preparation unit is a plate heat exchanger comprising at least a plate designed with a path for beverage circulation.
According to the above specific embodiment, the plate heat exchanger, the selective orienting fluid path and the mixing chamber can be formed of one single piece of material.

Preferably, the machine can comprise a tank for storing the cold beverage prepared in the beverage preparation unit. The beverage outlet of the beverage circuit is connected to said tank.
Accordingly, the machine is able to produce several cold beverages during non-peak demand periods and to store these beverages ready to be served as a batch in a tank. Preferably the tank is heat isolated and even refrigerated, for example by means of the cooling fluid.
Preferably the tank is closed by a dispensing valve that can be actuated by an operator. The valve can be actuated by a push lever designed for cooperating with a beverage cup.

The beverage preparation machine can comprise several beverage preparation units such as described above. Each of unit can be dedicated to the preparation of a specific beverage in order to avoid cross-contamination of the mixing chamber or alternatively can prepare the same beverage with the advantage of at a high output delivery.
The cold generation unit provides the cooling fluid to the heat exchanger unit of each beverage preparation unit.

Usually the beverage preparation unit comprises :
- at least one container for storing and dosing soluble beverage ingredient, and
- a hot water supply, and
said container and supply are configured for dispensing a dose of beverage ingredient and a volume of water in the beverage mixing chamber.

According to one embodiment, the beverage preparation unit can be coupled to a secondary beverage preparation machine, said secondary machine dispensing hot beverages and the hot beverage dispensing line of the secondary machine can emerge in the mixing chamber of the beverage preparation machine.
In this embodiment, the mixture of hot water and soluble beverage ingredient can be initially at least partially prepared in the secondary beverage preparation machine before being further introduced in the mixing chamber and cooled in the recirculation loop.
As a result, the beverage preparation machine can be used as an external module added to a pre-existing hot beverage preparation machine. The assembly of the beverage preparation unit to the secondary machine enables the preparation of cold beverages and upgrades the secondary machine able to provide hot or cold beverages now.

In a second aspect, there is provided a method for preparing cold beverages from soluble beverage ingredient and water with a beverage preparation machine such as described above comprising the steps of :
- introducing a dose of soluble beverage ingredient and hot water in the beverage mixing chamber to produce a hot beverage, then
- circulating the hot beverage in the loop between the heat exchanger unit and the beverage mixing chamber and circulating the cooling fluid in the heat exchanger until the beverage reaches the required cold temperature, then
- optionally storing the cold beverage in the beverage circuit, and
- dispensing the cold beverage, preferably in a tank.

According to the preferred embodiment, the steps of mixing and circulating are implemented by means of the same mixing impeller of the beverage mixing chamber. Preferably, the mixing impeller is a centrifugal pump.

Preferably, during the step of mixing, water is introduced at a temperature of at least 40 °C, preferably at least 60°C.

The soluble beverage powder can be instant coffee powder, chocolate powder, milk powder, instant tea powder, a fruit powder, a soup powder, or a mixture thereof.
In one mode of the process, the soluble beverage ingredient can be a powder comprising more than 20 % in weight sugar and more than 20 % in weight fat. In particular, the soluble beverage ingredient is 3-in-1 instant coffee mix or milk tea powder or chocolate powder.

In another mode of the process, the beverage powder can comprise more than 75 % in weight sugar. In particular, the soluble beverage ingredient is iced tea.

Preferably, hot water is introduced first in the mixing chamber that is before the soluble beverage ingredient. Consequently, the bottom of the mixing chamber is filled with water and when the beverage ingredient is further introduced, there is less risk that a cake of powder blocks the mixing impeller
Preferably the mixing impeller is rotated while water is introduced so that a vortex of liquid is produced immediately.
Preferably, once the mixing of water is initiated and the pump is fully covered by water, the beverage ingredient can be further introduced in the mixing chamber.

Preferably, the flow of the beverage in the circuit is controlled by the pump so that said pump remains always immersed in liquid.

According to the preferred embodiment, the method is implemented with the second embodiment of the machine, wherein the circulating means and the dispensing means forms an assembly, said assembly consisting in a selective orienting fluid path at the beverage outlet of the heat exchanger unit and said path being designed to guide the beverage either to the beverage mixing chamber or to the beverage outlet depending on the velocity of the beverage. With this machine, the method comprises the steps of:
- introducing a dose of soluble beverage ingredient and hot water in the beverage mixing chamber to produce a hot beverage, and rotating the mixing impeller at high speed in order to circulate the hot beverage in the loop between the heat exchanger unit and the beverage mixing chamber until the beverage reaches the required cold temperature, then
- rotating the mixing impeller at a lower speed in order to dispense the beverage through the beverage dispensing outlet.
The high speed is set to get a sufficient velocity of the flow of beverage in the selective orienting fluid path so that the beverage flows back to the beverage mixing chamber. The lower speed is set so that the beverage reaches the second beverage outlet of the selective orienting path and is dispensed.

Alternatively, the method can be implemented with the first embodiment of the machine, wherein the circulating means is a first valve, said first valve being positioned close to the bottom of the beverage mixing chamber, and the dispensing means is a second valve, said second valve being positioned close to the bottom of the heat exchanger unit. With this machine, the method comprises the steps of:
- introducing a dose of soluble beverage ingredient and hot water in the beverage mixing chamber and actuating the mixing impeller to produce a hot beverage while keeping the first valve and the second valve closed, then
- opening the first valve and circulating the hot beverage in the loop between the heat exchanger unit and the beverage mixing chamber until the beverage reaches the required cold temperature, then
- opening the second valve in order to dispense the beverage.

In a third aspect, there is provided a method for cleaning a beverage preparation machine such as described above and comprising a selective orienting fluid path, said method comprising the steps of :
- introducing a cleaning liquid in the beverage mixing chamber and rotating the mixing impeller at high speed in order to circulate the cleaning liquid in the loop between the heat exchanger unit and the beverage mixing chamber, then
- rotating the mixing impeller at a lower speed in order to evacuate the beverage through the beverage dispensing outlet.

The cleaning liquid is usually hot water, optionally mixed with a cleaning agent. The circulation of the cleaning liquid in closed loop at high speed enables the disinfection of the internal parts and the dissolution of any residues in these parts. Then, the cleaning solution can be evacuated by pumping the liquid at a lower speed. The lower speed is set so that the cleaning liquid reaches the second beverage outlet of the selective orienting path. Eventually a further rinsing operation with water only can be implemented, this rinsing operation comprising the same steps of pumping at high speed for recirculation and then pumping at lower speed for evacuation.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

The characteristics and advantages of the invention will be better understood in relation to the following figures :
- Figure 1 is a schematic view of a beverage preparation machine according the a first embodiment present invention,
- Figure 2a is a longitudinal section of a mixing chamber according to the first embodiment of the present invention,
- Figure 2b is an extracted view of the impellers of the mixing chamber of Figure 2a,
- Figure 2c is a partial vertical section view of the mixing chamber of Figure 2a,
- Figure 3 is a perspective view of the mixing chamber of Figure 2a.
- Figure 4 is a schematic view of an alternative mode of the first embodiment of the beverage preparation machine of Figure 1,
- Figure 5 is a schematic view of a beverage preparation machine according to the second embodiment of the present invention,
- Figure 6a is a perspective view of a part of the beverage preparation unit that can be implemented in the machine of Figure 5,
- Figure 6b is a top view of the unit of Figure 6a,
- Figures 6c and 6d are cross-sectional views of the unit of the Figure 6b as taken along plane AA and plane BB respectively,
- Figure 6e is a perspective view of the cross section of Figure 6d,
- Figure 6f is a view of the single piece of material comprising the mixing bowl, a part of the heat exchanger and the selective orienting fluid path used in Figures 6a to 6e,
- Figure 7 is a schematic view of an alternative beverage preparation machine according to the present invention,
- Figure 8 is a schematic view of a cold generation unit that can be used in the beverage preparation machine of the present invention.

### Detailed description of the drawings

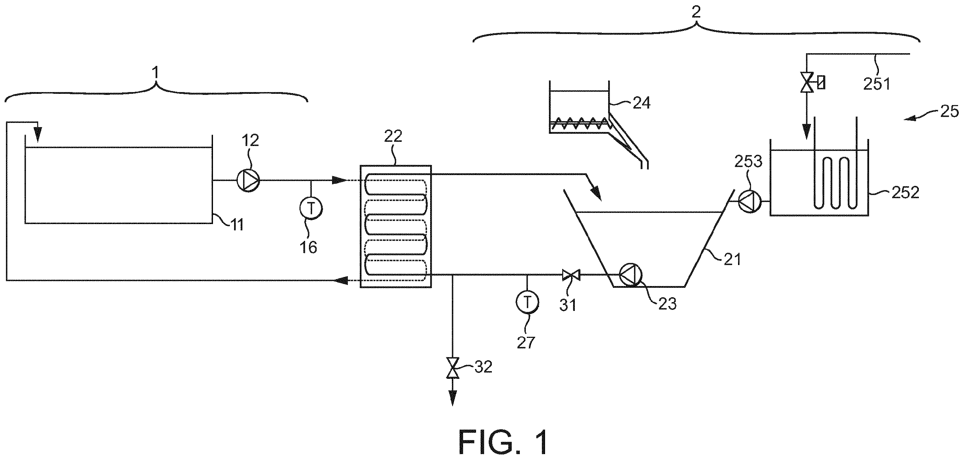

**Figure 1** illustrates a beverage preparation machine according to the first embodiment of the invention. The beverage preparation machine comprises a beverage preparation unit 2 in which the hot beverage is prepared and then cooled.

The beverage preparation unit 2 comprises a beverage mixing chamber 21 configured for receiving :
- a dose of soluble beverage ingredient from a storing and dosing container 24, and
- hot water from a hot water supply 25 comprising a water supply 251, a water heating tank 252 and a pump 253.
The beverage mixing chamber 21 is configured for mixing the dose of soluble beverage ingredient and hot water to produce a hot beverage. Generally the chamber comprises a mixing impeller to agitate and dissolve the beverage ingredient in hot water.

The beverage preparation unit 2 comprises a heat exchanger unit 22 configured for exchanging heat between the hot beverage produced by the beverage mixing chamber 21 and a cooling fluid supplied by a cold generation unit 1.
In the illustrated embodiment, the cold generation unit 1 comprises a cooling fluid tank from which cooling fluid, such as cold propylene glycol, is pumped by a pump 12 to be fed in the heat exchanger 22 and then fed back to the cooling fluid tank forming a cooling fluid circuit. In an alternative embodiment, the illustrated cold generation unit 1 can be replaced by a refrigerated unit like a gas compressor providing the heat exchanger unit 22 with a cold fluid. Similarly, the beverage preparation unit 2 comprises a beverage circuit designed to enable the circulation of the beverage in a loop between the heat exchanger unit 22 and the beverage mixing chamber 21. The circuit comprises a pump 23 for circulating the beverage in the beverage circuit. The circuit is designed so that hot beverage is pumped from the beverage mixing chamber, preferably at its bottom, and circulated in the heat exchanger 22 to exchange heat with the cooling fluid before being fed back to the mixing chamber 21, preferably at its top.

Preferably, the heat exchanger is a plate heat exchanger, the cooling fluid and hot beverage circulating in opposed directions.
The circulation happens until the desired temperature is reached for the beverage. Temperature sensor 27 enables the control of said desired temperature.

The beverage preparation unit 2 comprises two valves 31, 32 for controlling the circulation of the beverage in the beverage preparation unit 2.
During the preparation of the beverage in the mixing chamber 21, the valve 31 is closed so as to retain the beverage ingredient and hot water a sufficient long period in the chamber to get efficient dissolution. Once the beverage is ready, yet hot, the valve 31 is opened and the pump 23 is actuated to circulate the hot beverage to the heat exchanger 22. Simultaneously the valve 32 remains closed. After circulation in the heat exchanger and when leaving the heat exchanger, the cooled beverage is fed back to the mixing chamber 21 and, as long as the pump 23 is actuated, the beverage circulates between the chamber and the heat exchanger.
All along this phase of circulation of the beverage in the beverage preparation unit 2, the pump 12 of the cold generation unit 1 is actuated to feed the cooling fluid to the heat exchanger 22.
The temperature sensor 27 measures the temperature of the beverage in the circulation loop. When the requested temperature is reached, the pumps 12, 23 are stopped or their speeds are decreased. The beverage can be dispensed or can be stored in the mixing chamber or in the heat exchanger or in both devices before the beverage is ordered and dispensed. If the cold beverage is stored in the beverage preparation unit 2 during a long period of time, the pumps 12, 23 can be actuated for short periods of time to keep the beverage sufficiently cold or to avoid that it freezes.
During dispensing, valves 32 and 31 are opened. The pump 23 can be actuated to push the beverage out of the mixing chamber 21 to the dispensing valve 32.

Downstream to the valve 32, a tank (not represented) can be positioned to store several prepared beverages and provide a batch of beverages for several beverage dispensing.

Although Figure 1 illustrates the presence of one beverage preparation unit 2 only, the beverage preparation machine can comprises several other similar beverage preparation units 2 in order to prepare different types of beverages from different sorts of beverage ingredients stored in the storing and dosing containers 24. In that case, the machine can comprise several tanks downstream to the valves 32 of the several beverage preparation units.

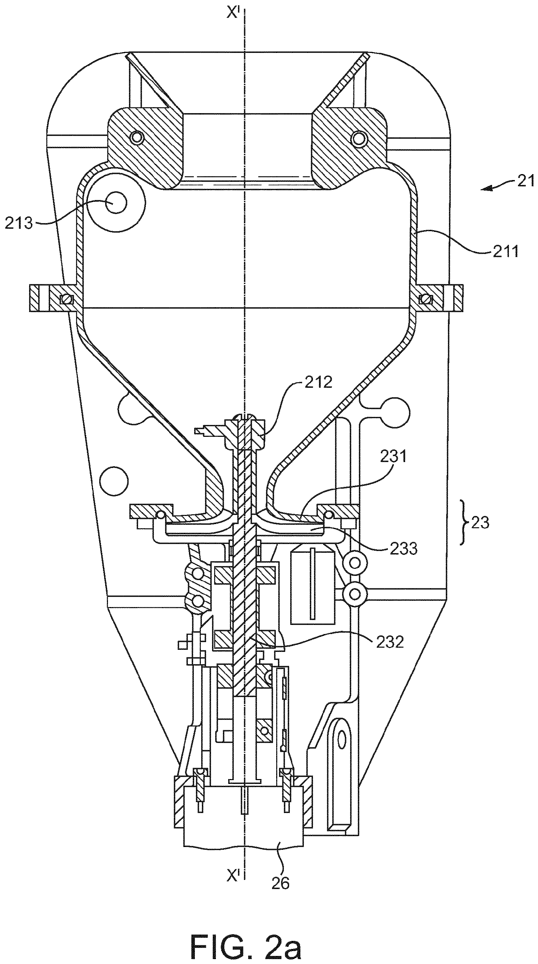

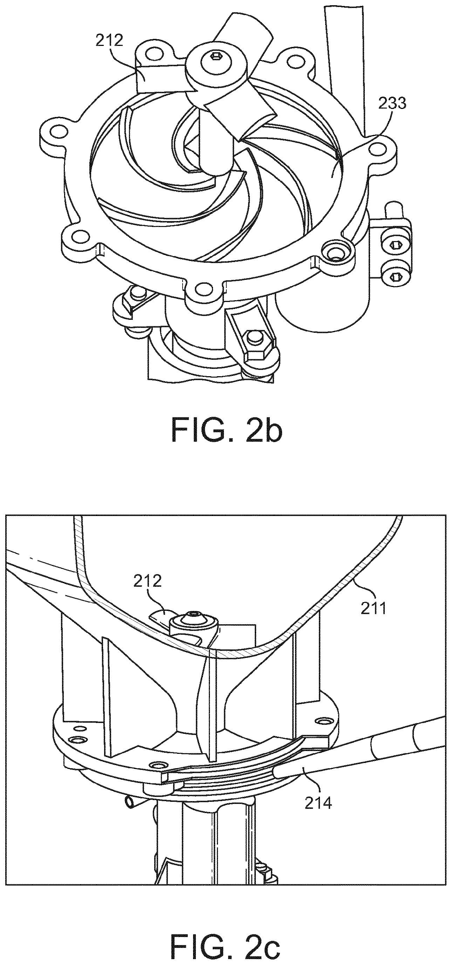

**Figure 2a** is a longitudinal section of a beverage mixing chamber 21 that can be used in the beverage preparation machine of Figure 1.
The chamber comprises a bowl 211 defining an internal volume. The top of the chamber is opened so that beverage ingredient can be introduced therethrough by gravity. Hot water is introduced through a water inlet 213 This inlet preferably introduces water at the top of the chamber and along a tangential direction. Alternatively water can be introduced through the top opening of the mixing bowl.
A centrifugal pump 23 is positioned at the bottom of the chamber. The rotating axis of the centrifugal pump extends along the longitudinal axis XX' of the mixing chamber. The impeller 233 of the centrifugal pump is attached to the shaft 232 of a motor 26 and extends along a plane perpendicular to the shaft. At the bottom, the body of the chamber designs the casing 231 of the impeller of the centrifugal pump. The blades of the impeller of the centrifugal pump are illustrated in **Figure 2b** and are designed :
- so as to suck the liquid present in the chamber along the axis of the shaft and to push said liquid radially to the centrifugal pump outlet 214, as illustrated in **Figure 2c****,** when the pump rotates in one first direction (the pumping rotation), and
- so as to agitate the liquid present in the chamber when the pump rotates in the second direction (the non-pumping rotation).
The mixing chamber can comprise an additional agitating impeller 212 attached to the same shaft 232 as the centrifugal pump. This additional agitating impeller 212 is positioned in the mixing chamber outside the casing of the centrifugal pump. This impeller enable the agitation of the beverage whatever the sense of rotation of the shaft. It provides efficient dissolution of the beverage ingredient in hot water when the beverage is kept in the mixing chamber that is when the centrifugal pump is rotated in its non pumping direction.
Finally **Figure 2d** is a global view of the mixing chamber making apparent the top opening 216 for the introduction of a dose of beverage ingredient, the tangential water inlet 213, the conduit 28 attached to the beverage outlet 214 and the beverage recirculation inlet 215 enabling the introduction of beverage coming from the recirculation loop back in the mixing chamber.

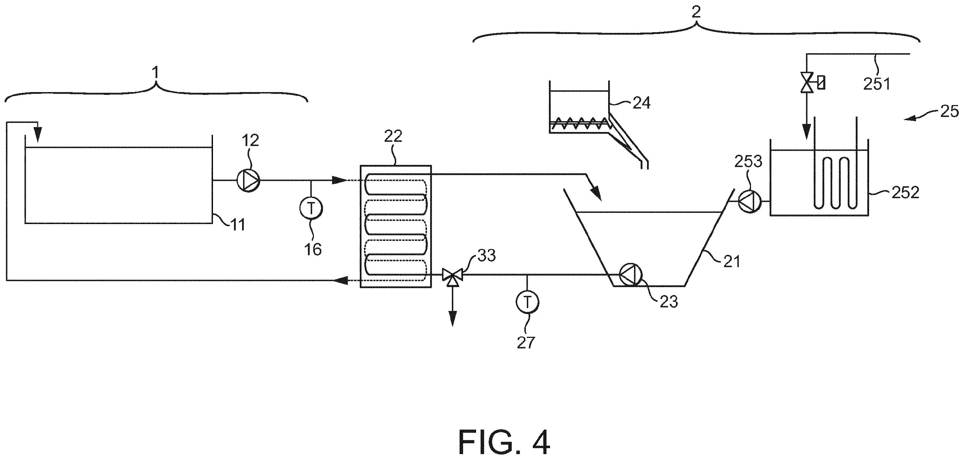

**Figure 4** illustrates a beverage preparation machine such as defined in Figure 1 except that both valves 31, 32 have been replaced by a single three-way valve 33.

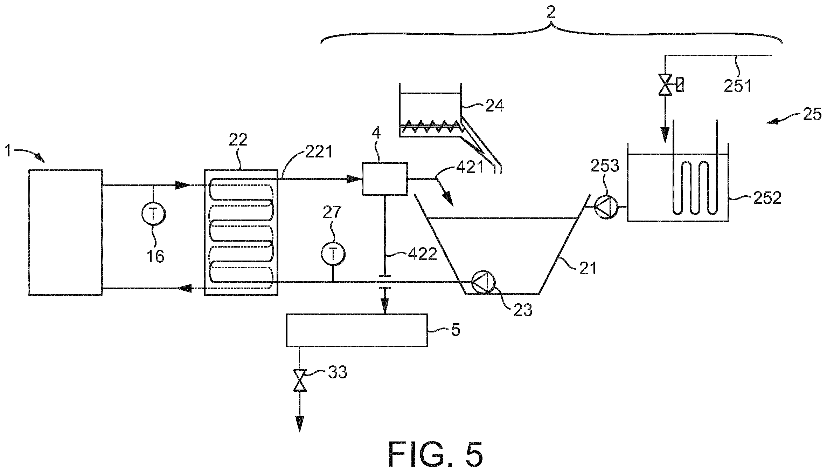

**Figure 5** illustrates a beverage preparation machine according to the second embodiment of the invention. The machine comprises the same components as the machine illustrated in Figure 1 except that the machine does not comprise the two valves 31, 32 and that the cold generation unit 1 is not detailed. This cold generation unit can be any known technology able to provide a cooling fluid. In general this cold generation unit 1 comprises a refrigeration circuit 13 having a refrigerant circulating therein for generating cold and generally comprising a compressor 131, a condenser 132, an expansion means 133 (expansion valve or capillarity tubes) and an evaporator 134 for treating the refrigerant and corresponding to the heat exchanger 22. These devices are well known in the art, as is their operation, and therefore, these elements are not described in detail for purposes of the invention.
According to this second embodiment, the machine comprises a selective orienting fluid path 4 at the beverage outlet 221 of the heat exchanger. This selective orienting fluid path 4 supplies the functions of :
- either enabling circulation of the beverage in the loop between the beverage mixing chamber 21 and the heat exchanger unit 22 by directing the beverage through a first beverage outlet 421,
- or enabling dispensing of the beverage from the beverage circuit by directing the beverage through a second beverage outlet 422,
depending on the velocity of the beverage liquid at the beverage outlet 221 of the heat exchanger.
Preferably, and as illustrated, the machine comprises a tank 5 for storing the cold beverage prepared in the beverage preparation unit 2. The beverage dispensing outlet of the beverage preparation unit is connected to this tank 5. The tank enable the storage of several prepared beverages and is able to answer a demand for several successive dispensing orders rapidly. The tank comprises a dispensing valve 33 that can be actuated once a beverage is ordered. For example the dispensing valve 33 can be a push lever. Preferably, the tank 5 is refrigerated in order to keep the beverage cold, preferably by means of the cooling fluid supplied by the cooling unit. Preferably the tank 5 is provided with an agitator to avoid a gradient of temperature or a potential sedimentation of some beverage components. Preferably the tank 5 is provided with a beverage level sensor in order to control the volume of beverage. A feedback loop with the process control unit of the machine enables the preparation of new beverages if necessary.
The volume of the tank is set to store sufficient beverages in order to answer a peak demand, for example during lunch and dinner periods. While the tank is progressively emptied, the beverage preparation unit is able to prepare new beverages simultaneously. During low demand periods, such as mornings and afternoons, the beverage preparation unit can produce enough beverages to fill the tank 5 before the high demand periods. Consequently, although the preparation of each beverage remains long to the necessity to cool the hot beverage, there is no waiting time for the customers by means of the tank providing a batch of beverages.

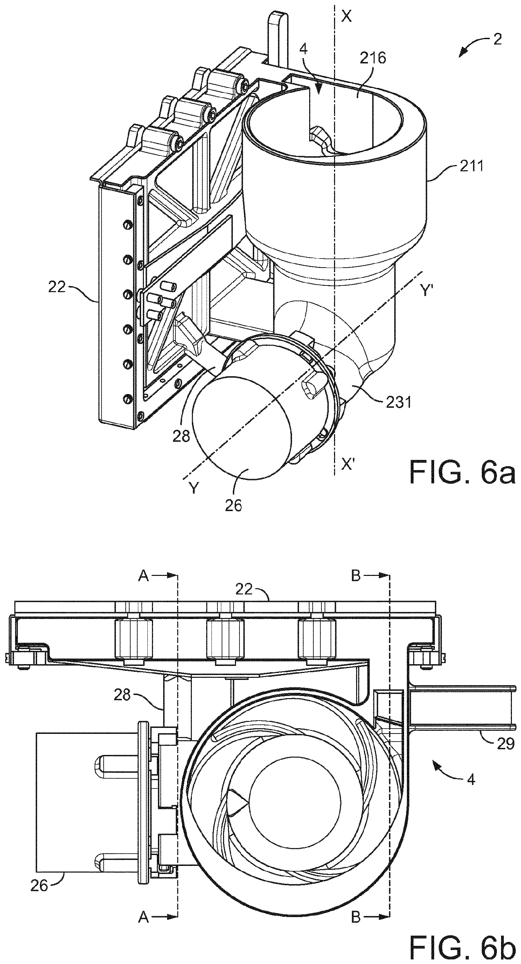

**Figure 6a****, respectively 6b,** is a perspective view, respectively a top view, of the beverage mixing chamber 21, the heat exchanger 22 and the pump 23 of the beverage preparation unit that can be implemented in the machine of Figure 5.
The chamber comprises a bowl 211 defining an internal volume. The top 216 of the chamber is opened so that beverage ingredient and hot water can be introduced therethrough by gravity.
A centrifugal pump (not visible) is positioned at the bottom of the chamber. The rotating axis of the centrifugal pump extends along a longitudinal axis YY' perpendicular to the longitudinal axis XX' of the mixing chamber. The axis YY' of the pump is oriented horizontally. This orientation enables the position of the motor 26 at the back side of the machine rather than at the bottom. The impeller of the centrifugal pump is attached to the shaft of a motor 26 and extends along a plane perpendicular to the shaft. At the bottom, the body of the chamber designs the casing 231 of the impeller of the centrifugal pump.
The blades of the impeller of the centrifugal pump (not illustrated) are designed so as to suck the liquid present in the chamber along the axis of the shaft and push said liquid radially to the centrifugal pump outlet 214, when the pump rotates in one first direction (the pumping rotation).
The centrifugal pump outlet is connected to the heat exchanger 22 via a conduit 28 in order to push the hot beverage inside the heat exchanger.
At the upper side of the heat exchanger, the beverage outlet of the heat exchanger is connected to the top opening 216 of the chamber by a selective orienting fluid path 4.

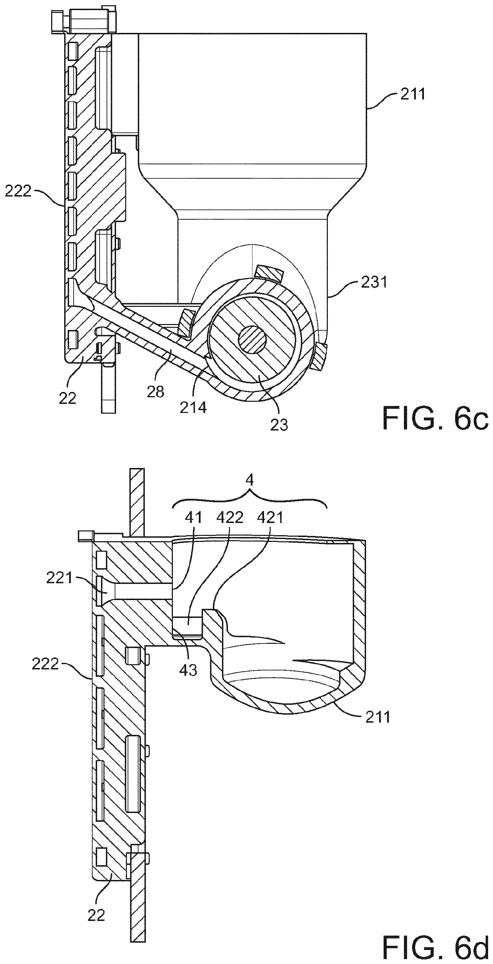

**Figure 6c** is a horizontal section of Figure 6b along plane AA showing the conduit 28 linking the centrifugal pump outlet 214 to the heat exchanger 22. In the heat exchanger, hot beverage exchanges heat with the cooling fluid circulating along the external sidewall 222 of the heat exchanger.

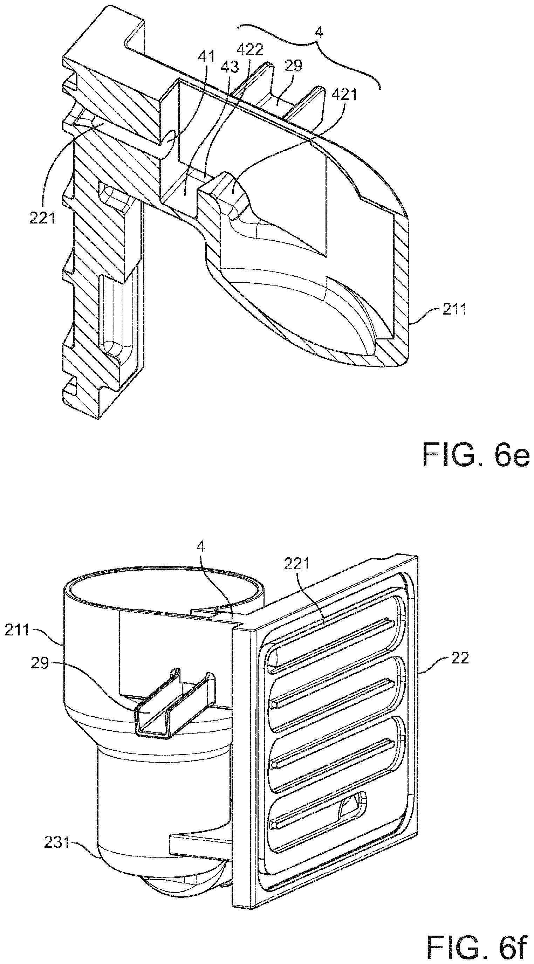

**Figure 6d** is a horizontal section of Figure 6b along plane BB showing the beverage outlet 221 of the heat exchanger unit and the selective orienting fluid path 4.This path is designed to guide the beverage either to the bowl 211 of the beverage mixing chamber or to the beverage dispensing outlet depending on the velocity of the beverage.
As illustrated in Figure 6a and **Figure 6e****,** a perspective view of Figure 6d, this path 4 receives beverage from the beverage outlet 221 of the heat exchanger unit through a beverage inlet 41 connected to the outlet 221 of the heat exchanger unit.
The path 4 comprises a first beverage outlet 421 connected to the wall of the bowl of the mixing chamber. This first beverage outlet 421 faces the beverage inlet 41. As a consequence, a flow of beverage emerging from the beverage outlet 221 of the heat exchanger unit at a relatively high velocity- generally in the form of a jet - is directed in direction of this first beverage outlet 421 and flows in the bowl of the mixing chamber enabling the circulation of the beverage from the heat exchanger to the mixing chamber. The path 4 comprises a recess 43 extending downwardly under the space between the beverage inlet 41 and the first beverage outlet 421. In addition, the path 4 comprises a second beverage outlet 422 positioned at the bottom of said recess. As a consequence, a flow of beverage emerging from the beverage outlet 221 of the heat exchanger unit at a relatively low velocity gently falls in the recess 43 of the path and leaves the path through this second beverage outlet 422 at the bottom of the recess. This outlet 422 leads to beverage dispensing outlet 29 of the beverage preparation unit.
In this illustrated embodiment, the rotation of the centrifugal pump 23 comprised between 10000 and 13000 rpm enables the circulation of the beverage at a velocity sufficient to create a jet of beverage overpassing the recess 43 of the path and reaching the first beverage outlet 421 in the mixing chamber.

If dispensing of the beverage is desired, the speed of the rotation of the centrifugal pump 23 can be decreased between 4000 and 6000 rpm and as a result, the beverage emerges from the heat exchanger at a slower velocity so that it falls in the recess 43 and is dispensed through the outlet 29.
The control of the circulation or dispensing of the beverage depends on the geometry of the path, in particular :
- the section of the beverage inlet 41,
- the distance between the beverage inlet 41 and the first beverage outlet 421,
so that the beverage forms a jet and that this jet reaches the first beverage outlet 421.

The configuration of the beverage preparation unit comprising the circuit integrating the heat exchanger unit 22, the beverage mixing chamber 21, the pump, the selective orienting path 4 enables the easy cleaning of the beverage preparation machine without the necessity to dismantle the different parts of the machine. Hot water, optionally mixed with a cleaning agent, can be introduced in the mixing chamber and circulated in a closed loop by the pump between the mixing chamber and the heat exchanger until the internal parts are cleaned and disinfected. First, the pump is actuated at high speed in order to enable the recirculation of the cleaning solution in the closed loop, then the speed of the pump is decreased in order to evacuate the cleaning solution through the selective orienting path.

In this illustrated embodiment, the bowl 21 of the mixing chamber 21, the housing of the pump, a part of the heat exchanger 22 and the path 4 are made of one single piece of material, as illustrated in **Figure 6f****.** This embodiment facilitates dismantling of the beverage preparation unit by the operator in view of thorough cleaning or a maintenance operation.

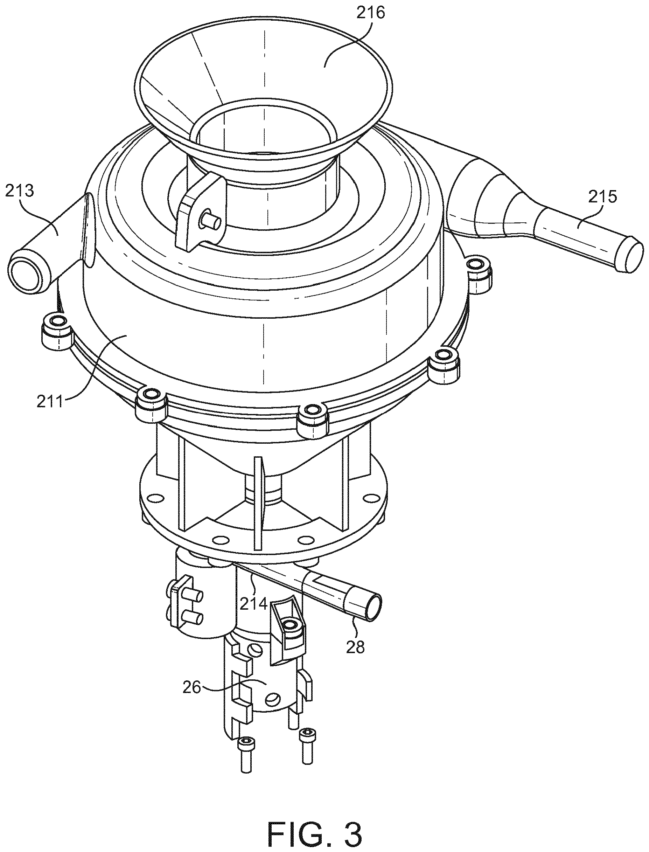

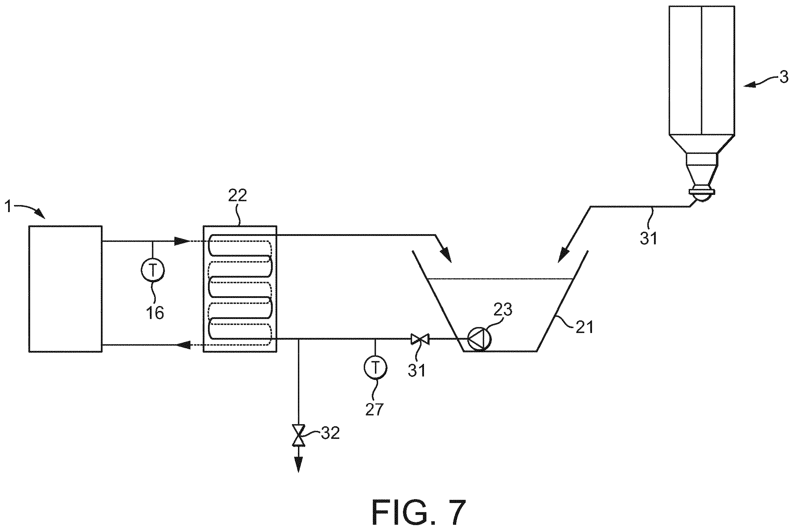

**Figure 7** is an alternative implementation of the beverage preparation machine of Figure 1 wherein the dispensing line 31 of a secondary beverage preparation machine 3 supplies the beverage mixing chamber 21 with hot beverages prepared in the secondary machine. Once the hot beverage is dispensed in the mixing chamber 21, the pumps 23, 12 can be actuated to initiate the cooling of the beverage as explained above in relation with Figure 1.
This implementation can be carried out with the beverage preparation machines of Figures 3 and 5 too. Any type of cold generation unit 1 can be used.

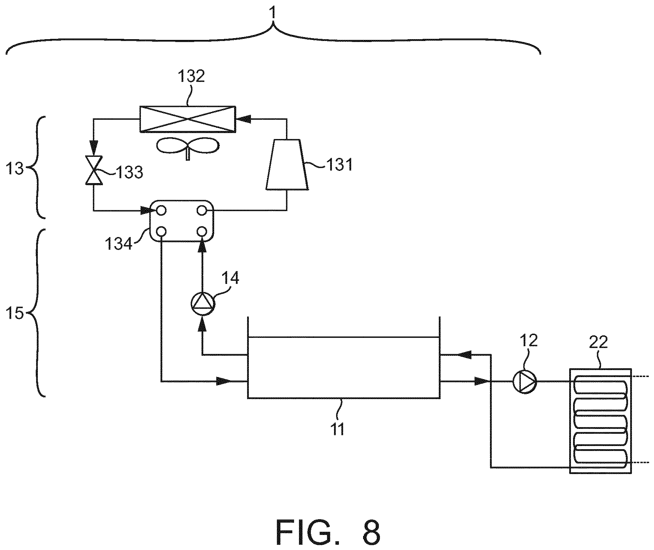

**Figure 8** is a schematic view of a cold generation unit 1 that can be used to provide the cooling fluid in the beverage preparation machines of Figures 1, 3 and 5.
The cold generation unit 1 comprises a refrigeration circuit 13 having a refrigerant circulating therein for generating cold and generally comprising a compressor 131, a condenser 132, an expansion means 133 (expansion valve or capillarity tubes) and an evaporator 134 for treating the refrigerant. These devices are well known in the art, as is their operation, and therefore, these elements are not described in detail for purposes of the invention.
The evaporator 134 is a heat exchanger enabling the cooling of the cooling fluid circulating in the cooling fluid circuit 15. Preferably this cooling fluid is propylene glycol. The cooling fluid is supplied from a cooling fluid tank 11 by a pump 14 and fed back to the cooling fluid tank 11 once cooled by the heat exchanger 134. Cooling fluid stored in the cooling fluid tank can be supplied by a pump 12 to the heat exchanger 22 in order to cool the hot beverage and then fed back to the cooling fluid tank 11.
In an alternative way (not illustrated), the cooling fluid circuit 15 can be suppressed and the refrigerant of the refrigeration circuit 13 can be supplied to the heat exchanger 22 in order to cool the hot beverage and then fed back to the cooling fluid tank 11.

Although not illustrated, the invention relates too to beverage preparation machines comprising the combination of each above types of centrifugal pumps (oriented either vertically or horizontally) with both different types of circulating and dispensing means (either controlled through valves (as illustrated in first embodiment) or controlled mechanically (as illustrated in second embodiment)). In addition different types of cooling units can be used indifferently with different types of pumps and different types of circulating and dispensing means.

The beverage preparation machine of the present invention presents the advantage of combining the function of agitation and dissolution of the beverage in preparation and circulation for cooling of said beverage by means of the same pumping device.

**List of references in the drawings :**

| | |
|---|---|
| cold generation unit | 1 |
| cooling fluid tank | 11 |
| pump | 12 |
| refrigeration circuit | 13 |
| compressor | 131 |
| condenser | 132 |
| expansion means | 133 |
| evaporator | 134 |
| pump | 14 |
| cooling fluid circuit | 15 |
| temperature sensor | 16 |
| beverage preparation unit | 2 |
| beverage mixing chamber | 21 |
| bowl | 211 |
| impeller | 212 |
| water inlet | 213 |
| beverage outlet | 214 |
| beverage recirculation inlet | 215 |
| top opening | 216 |
| heat exchanger | 22 |
| heat exchanger beverage outlet | 221 |
| external side wall | 222 |
| pump | 23 |
| casing | 231 |
| pump shaft | 232 |
| impeller | 233 |
| storing and dosing container | 24 |
| hot water supply | 25 |
| water supply | 251 |
| water heating tank | 252 |
| pump | 253 |
| motor | 26 |
| temperature sensor | 27 |
| conduit | 28 |
| beverage dispensing outlet | 29 |
| secondary beverage preparation machine | 3 |
| dispensing line | 31 |
| valves | 31, 32, 33 |
| selective orienting fluid path | 4 |
| beverage inlet | 41 |
| first beverage outlet | 421 |
| second beverage outlet | 422 |
| recess | 43 |
| beverage tank | 5 |

## Claims

1. Beverage preparation machine (10) configured for preparing cold beverages from soluble beverage ingredient and water, said machine comprising :
- a cold generation unit (1) for supplying a cooling fluid, and
- at least one beverage preparation unit (2) comprising :
. a beverage mixing chamber (21) configured for mixing a soluble beverage ingredient and hot water to produce a hot beverage, said chamber comprising a mixing impeller, and
. a heat exchanger unit (22) configured for exchanging heat between the beverage produced by the beverage mixing chamber and the cooling fluid supplied by the cold generation unit, **characterized in that** said machine further comprises:
. a beverage circuit comprising the heat exchanger unit (22) and the beverage mixing chamber (21), said circuit being designed to enable the circulation of the beverage in a closed loop between the beverage mixing chamber and the heat exchanger unit and said circuit comprising a pump (23) for circulating the beverage in the beverage circuit, and
. a circulating means (31, 4) adapted for enabling circulation of the beverage in the closed loop between the beverage mixing chamber and the heat exchanger unit, and
. a dispensing means (32, 4) adapted for enabling dispensing of the beverage from the beverage circuit though a beverage dispensing outlet.

2. Beverage preparation machine according to Claim 1, wherein the mixing impeller of the beverage mixing chamber is the pump (23) for circulating the beverage in the beverage circuit.

3. Beverage preparation machine according to Claim 2, wherein the mixing impeller is a centrifugal pump positioned at the bottom of the mixing chamber.

4. Beverage preparation machine according to Claim 3, wherein :
- the mixing chamber (21) comprises a beverage outlet (214) oriented perpendicularly to the axis of rotation of the centrifugal pump, and
- the bottom of the body of the chamber is designed to form the casing (231) of the centrifugal pump (23) and to surround the impeller (232) of the centrifugal pump.

5. Beverage preparation machine according to any one of the precedent claims, wherein :
- the circulating means (31) is a first valve, said first valve being positioned close to the bottom of the beverage mixing chamber, and
- the dispensing means (32) is a second valve, said second valve being positioned close to the bottom of the heat exchanger unit.

6. Beverage preparation machine according to any one of the Claims 1 to 4, wherein the circulating means and the dispensing means form an assembly said assembly consisting in a selective orienting fluid path (4) at the beverage outlet (221) of the heat exchanger unit, said path being designed to guide the beverage either to the beverage mixing chamber or to the beverage dispensing outlet depending on the velocity of the beverage.

7. Beverage preparation machine according to the precedent claim, wherein the selective orienting fluid path (4) comprises :
- a beverage inlet (41) connected to the outlet of the heat exchanger unit,
- a first beverage outlet (421) connected to the wall of the mixing chamber, said first beverage outlet facing the beverage inlet,
- a recess (43) extending downwardly under the space between the beverage inlet and the first beverage outlet
- a second beverage outlet (422) positioned at the bottom of said recess and connected to the beverage dispensing outlet.

8. Beverage preparation machine according to Claim 6 or 7, wherein :
- the heat exchanger (22) is a plate heat exchanger, said plate heat exchanger comprising at least a plate designed with a path for beverage circulation, and
- said plate, the selective orienting fluid path and the mixing chamber are formed of one single piece of material.

9. Beverage preparation machine according to any one of the precedent claims, wherein said machine comprises a tank (5) for storing the cold beverage prepared in the beverage preparation unit (2) and wherein the beverage dispensing outlet (29) of the beverage circuit is connected to said tank.

10. Beverage preparation machine according to any one of the precedent claims, wherein the beverage preparation unit (2) comprises :
- at least one container (24) for storing and dosing soluble beverage ingredient, and
- a hot water supply (25), and
said container and supply being configured for dispensing a dose of beverage ingredient and water in the beverage mixing chamber.

11. Beverage preparation machine according to any one of the precedent claims, wherein said machine comprises several beverage preparation units (2).

12. Beverage preparation machine according to any one of Claims 1 to 9, wherein the beverage preparation unit (2) is coupled to a secondary beverage preparation machine (3), said secondary machine dispensing hot beverages and wherein the hot beverage dispensing line (31) of the secondary machine emerges in the mixing chamber (21) of the beverage preparation machine.

13. Method for preparing cold beverages from soluble beverage ingredient and water with a beverage preparation machine according to any one of Claims 1 to 12 comprising the steps of :
- introducing a dose of soluble beverage ingredient and hot water in the beverage mixing chamber to produce a hot beverage, then
- circulating the hot beverage in the loop between the heat exchanger unit and the beverage mixing chamber and simultaneously circulating the cooling fluid in the heat exchanger until the beverage reaches the required cold temperature, then
- optionally storing the cold beverage in the beverage circuit, and
- dispensing the cold beverage, preferably in a tank.

14. Method according to the precedent claim, wherein the machine comprises the circulating means and the dispensing means forming an assembly said assembly consisting in a selective orienting fluid path (4) at the beverage outlet of the heat exchanger unit, said path being designed to guide the beverage either to the beverage mixing chamber (21) or to the beverage dispensing outlet (29) depending on the velocity of the beverage,
said method comprising the steps of:
- introducing a dose of soluble beverage ingredient and hot water in the beverage mixing chamber to produce a hot beverage, and rotating the mixing impeller at high speed in order to circulate the hot beverage in the loop between the heat exchanger unit and the beverage mixing chamber until the beverage reaches the required cold temperature, then
- rotating the mixing impeller at a lower speed in order to dispense the beverage through the beverage dispensing outlet.

15. Method for cleaning a beverage preparation machine according to any one of Claims 6 to 8 comprising the steps of:
- introducing a cleaning liquid in the beverage mixing chamber and rotating the mixing impeller at high speed in order to circulate the cleaning liquid in the loop between the heat exchanger unit and the beverage mixing chamber, then
- rotating the mixing impeller at a lower speed in order to evacuate the beverage through the beverage dispensing outlet.

## Patentansprüche

1. Getränkezubereitungsmaschine (10), die zum Zubereiten kalter Getränke aus löslichem Getränkebestandteil und Wasser konfiguriert ist, wobei die Maschine Folgendes umfasst:
- eine Kälteerzeugungseinheit (1) zum Zuführen eines Kühlfluids, und
- mindestens eine Getränkezubereitungseinheit (2), umfassend:
. eine Getränkemischkammer (21), die zum Mischen eines löslichen Getränkebestandteils und heißen Wassers konfiguriert ist, um ein heißes Getränk herzustellen, wobei die Kammer ein Mischlaufrad umfasst, und
. eine Wärmetauschereinheit (22), die zum Austauschen von Wärme zwischen dem von der Getränkemischkammer hergestellten Getränk und dem von der Kälteerzeugungseinheit zugeführten Kühlfluid konfiguriert ist, **dadurch gekennzeichnet, dass** die Maschine ferner Folgendes umfasst:
. einen Getränkekreislauf, der die Wärmetauschereinheit (22) und die Getränkemischkammer (21) umfasst, wobei der Kreislauf dazu ausgestaltet ist, die Zirkulation des Getränks in einem geschlossenen Kreis zwischen der Getränkemischkammer und der Wärmetauschereinheit zu ermöglichen, und wobei der Kreislauf eine Pumpe (23) zum Zirkulieren des Getränks in dem Getränkekreislauf umfasst, und
. ein Zirkulationsmittel (31, 4), das zum Ermöglichen der Zirkulation des Getränks in dem geschlossenen Kreis zwischen der Getränkemischkammer und der Wärmetauschereinheit ausgelegt ist, und
. ein Ausgabemittel (32, 4), das zum Ermöglichen der Ausgabe des Getränks aus dem Getränkekreislauf durch einen Getränkeausgabeauslass ausgelegt ist.

2. Getränkezubereitungsmaschine nach Anspruch 1, wobei das Mischlaufrad der Getränkemischkammer die Pumpe (23) zum Zirkulieren des Getränks im Getränkekreislauf ist.

3. Getränkezubereitungsmaschine nach Anspruch 2, wobei das Mischlaufrad eine am Boden der Mischkammer positionierte Zentrifugalpumpe ist.

4. Getränkezubereitungsmaschine nach Anspruch 3, wobei:
- die Mischkammer (21) einen Getränkeauslass (214) umfasst, der senkrecht zur Drehachse der Zentrifugalpumpe ausgerichtet ist, und
- der Boden des Kammerkörpers dazu ausgestaltet ist, das Gehäuse (231) der Zentrifugalpumpe (23) zu bilden und das Laufrad (232) der Zentrifugalpumpe zu umgeben.

5. Getränkezubereitungsmaschine nach einem der vorstehenden Ansprüche, wobei:
- das Zirkulationsmittel (31) ein erstes Ventil ist, wobei das erste Ventil nahe dem Boden der Getränkemischkammer positioniert ist, und
- das Ausgabemittel (32) ein zweites Ventil ist, wobei das zweite Ventil nahe dem Boden der Wärmetauschereinheit positioniert ist.

6. Getränkezubereitungsmaschine nach einem der Ansprüche 1 bis 4, wobei das Zirkulationsmittel und das Ausgabemittel eine Baugruppe bilden, wobei die Baugruppe aus einem selektiv ausrichtenden Fluidpfad (4) am Getränkeauslass (221) der Wärmetauschereinheit besteht, wobei der Pfad dazu ausgestaltet ist, das Getränk in Abhängigkeit von der Geschwindigkeit des Getränks entweder zu der Getränkemischkammer oder zu dem Getränkeausgabeauslass zu leiten.

7. Getränkezubereitungsmaschine nach dem vorstehenden Anspruch, wobei der selektiv ausrichtende Fluidpfad (4) Folgendes umfasst:
- einen Getränkeeinlass (41), der mit dem Auslass der Wärmetauschereinheit verbunden ist,
- einen ersten Getränkeauslass (421), der mit der Wand der Mischkammer verbunden ist, wobei der erste Getränkeauslass dem Getränkeeinlass zugewandt ist,
- eine Aussparung (43), die sich unter dem Raum zwischen dem Getränkeeinlass und dem ersten Getränkeauslass nach unten erstreckt,
- einen zweiten Getränkeauslass (422), der am Boden der Aussparung positioniert und mit dem Getränkeausgabeauslass verbunden ist.

8. Getränkezubereitungsmaschine nach Anspruch 6 oder 7, wobei:
- der Wärmetauscher (22) ein Plattenwärmetauscher ist, wobei der Plattenwärmetauscher mindestens eine Platte umfasst, die mit einem Pfad zur Getränkezirkulation ausgestaltet ist, und
- die Platte, der selektiv ausrichtende Fluidpfad und die Mischkammer aus einem einzigen Materialstück gebildet sind.

9. Getränkezubereitungsmaschine nach einem der vorstehenden Ansprüche, wobei die Maschine einen Tank (5) zum Aufbewahren des in der Getränkezubereitungseinheit (2) zubereiteten kalten Getränks umfasst und wobei der Getränkeausgabeauslass (29) des Getränkekreislaufs mit dem Tank verbunden ist.

10. Getränkezubereitungsmaschine nach einem der vorstehenden Ansprüche, wobei die Getränkezubereitungseinheit (2) Folgendes umfasst:
- mindestens einen Behälter (24) zum Aufbewahren und Dosieren eines löslichen Getränkebestandteils, und
- eine Heißwasserversorgung (25), und
wobei der Behälter und die Versorgung zum Ausgeben einer Dosis Getränkebestandteils und Wassers in die Getränkemischkammer konfiguriert sind.

11. Getränkezubereitungsmaschine nach einem der vorstehenden Ansprüche, wobei die Maschine mehrere Getränkezubereitungseinheiten (2) umfasst.

12. Getränkezubereitungsmaschine nach einem der Ansprüche 1 bis 9, wobei die Getränkezubereitungseinheit (2) mit einer sekundären Getränkezubereitungsmaschine (3) gekoppelt ist, wobei die sekundäre Maschine Heißgetränke ausgibt und wobei die Heißgetränkeausgabeleitung (31) der sekundären Maschine in die Mischkammer (21) der Getränkezubereitungsmaschine mündet.

13. Verfahren zur Zubereitung kalter Getränke aus einem löslichen Getränkebestandteil und Wasser mit einer Getränkezubereitungsmaschine nach einem der Ansprüche 1 bis 12, das die folgenden Schritte umfasst:
- Einführen einer Dosis löslichen Getränkebestandteils und heißen Wassers in die Getränkemischkammer, um ein heißes Getränk herzustellen, dann
- Zirkulieren des heißen Getränks in dem Kreis zwischen der Wärmetauschereinheit und der Getränkemischkammer und gleichzeitiges Zirkulieren des Kühlfluids in dem Wärmetauscher, bis das Getränk die erforderliche kalte Temperatur erreicht, dann
- wahlweise Aufbewahren des kalten Getränks in dem Getränkekreislauf, und
- Ausgeben des kalten Getränks, vorzugsweise in einen Tank.

14. Verfahren nach dem vorstehenden Anspruch, wobei die Maschine das Zirkulationsmittel und das Ausgabemittel umfasst, die eine Baugruppe bilden, wobei die Baugruppe aus einem selektiv ausrichtenden Fluidpfad (4) am Getränkeauslass der Wärmetauschereinheit besteht, wobei der Pfad dazu ausgestaltet ist, das Getränk in Abhängigkeit von der Geschwindigkeit des Getränks entweder zu der Getränkemischkammer (21) oder zu dem Getränkeausgabeauslass (29) zu leiten, wobei das Verfahren die folgenden Schritte umfasst:
- Einführen einer Dosis löslichen Getränkebestandteils und heißen Wassers in die Getränkemischkammer, um ein heißes Getränk herzustellen, und Drehen des Mischlaufrades mit hoher Geschwindigkeit, um das heiße Getränk in dem Kreis zwischen der Wärmetauschereinheit und der Getränkemischkammer zirkulieren zu lassen, bis das Getränk die erforderliche kalte Temperatur erreicht, dann
- Drehen des Mischlaufrades mit einer niedrigeren Geschwindigkeit, um das Getränk durch den Getränkeausgabeauslass auszugeben.

15. Verfahren zur Reinigung einer Getränkezubereitungsmaschine nach einem der Ansprüche 6 bis 8, das die folgenden Schritte umfasst:
- Einführen einer Reinigungsflüssigkeit in die Getränkemischkammer und Drehen des Mischlaufrades mit hoher Geschwindigkeit, um die Reinigungsflüssigkeit in dem Kreis zwischen der Wärmetauschereinheit und der Getränkemischkammer zu zirkulieren, dann
- Drehen des Mischlaufrades mit einer niedrigeren Geschwindigkeit, um das Getränk durch den Getränkeausgabeauslass abzulassen.

## Revendications

1. Machine de préparation de boissons (10) configurée pour préparer des boissons froides à partir d'ingrédient de boisson soluble et d'eau, ladite machine comprenant :
- une unité de génération de froid (1) pour fournir un liquide de refroidissement, et
- au moins une unité de préparation de boissons (2) comprenant :
une chambre de mélange de boisson (21) configurée pour mélanger un ingrédient de boisson soluble et de l'eau chaude afin de produire une boisson chaude, ladite chambre comprenant une roue de mélange, et
une unité d'échangeur de chaleur (22) configurée pour échanger de la chaleur entre la boisson produite par la chambre de mélange de boisson et le liquide de refroidissement fourni par l'unité de génération de froid, **caractérisée en ce que** ladite machine comprend en outre :
un circuit de boisson comprenant l'unité d'échangeur de chaleur (22) et la chambre de mélange de boisson (21), ledit circuit étant conçu pour permettre la circulation de la boisson dans une boucle fermée entre la chambre de mélange de boisson et l'unité d'échangeur de chaleur et ledit circuit comprenant une pompe (23) pour faire circuler la boisson dans le circuit de boisson, et
un moyen de circulation (31, 4) adapté pour permettre la circulation de la boisson dans la boucle fermée entre la chambre de mélange de boisson et l'unité d'échangeur de chaleur, et
un moyen de distribution (32, 4) adapté pour permettre la distribution de la boisson du circuit de boisson à travers une sortie de distribution de boisson.

2. Machine de préparation de boissons selon la revendication 1, dans laquelle la roue de mélange de la chambre de mélange de boisson est la pompe (23) pour faire circuler la boisson dans le circuit de boisson.

3. Machine de préparation de boissons selon la revendication 2, dans laquelle la roue de mélange est une pompe centrifuge positionnée au fond de la chambre de mélange.

4. Machine de préparation de boissons selon la revendication 3, dans laquelle :
- la chambre de mélange (21) comprend une sortie de boisson (214) orientée perpendiculairement à l'axe de rotation de la pompe centrifuge, et
- le fond du corps de la chambre est conçu pour former le boîtier (231) de la pompe centrifuge (23) et pour entourer la roue (232) de la pompe centrifuge.

5. Machine de préparation de boissons selon l'une quelconque des revendications précédentes, dans laquelle :
- le moyen de circulation (31) est une première vanne, ladite première vanne étant positionnée à proximité du fond de la chambre de mélange de boisson, et
- le moyen de distribution (32) est une deuxième vanne, ladite deuxième vanne étant positionnée à proximité du fond de l'unité d'échangeur de chaleur.

6. Machine de préparation de boissons selon l'une quelconque des revendications 1 à 4, dans laquelle le moyen de circulation et le moyen de distribution forment un ensemble, ledit ensemble consistant en un trajet de liquide d'orientation sélective (4) au niveau de la sortie de boisson (221) de l'unité d'échangeur de chaleur, ledit trajet étant conçu pour diriger la boisson soit vers la chambre de mélange de boisson, soit vers la sortie de distribution de boisson en fonction de la vitesse de la boisson.

7. Machine de préparation de boissons selon la revendication précédente, dans laquelle le trajet de liquide d'orientation sélective (4) comprend :
- une entrée de boisson (41) reliée à la sortie de l'unité d'échangeur de chaleur,
- une première sortie de boisson (421) reliée à la paroi de la chambre de mélange, ladite première sortie de boisson faisant face à l'entrée de boisson,
- un renfoncement (43) s'étendant vers le bas sous l'espace entre l'entrée de boisson et la première sortie de boisson
- une deuxième sortie de boisson (422) positionnée au fond dudit renfoncement et reliée à la sortie de distribution de boisson.

8. Machine de préparation de boissons selon la revendication 6 ou 7, dans laquelle :
- l'échangeur de chaleur (22) est un échangeur de chaleur à plaques, ledit échangeur de chaleur à plaques comprenant au moins une plaque conçue avec un trajet pour la circulation des boissons, et
- ladite plaque, le trajet de liquide d'orientation sélective et la chambre de mélange sont formés d'une seule pièce de matériau.

9. Machine de préparation de boissons selon l'une quelconque des revendications précédentes, dans laquelle ladite machine comprend un réservoir (5) pour stocker la boisson froide préparée dans l'unité de préparation de boissons (2) et dans laquelle la sortie de distribution de boisson (29) du circuit de boisson est reliée audit réservoir.

10. Machine de préparation de boissons selon l'une quelconque des revendications précédentes, dans laquelle l'unité de préparation de boissons (2) comprend :
- au moins un récipient (24) pour stocker et doser un ingrédient de boisson soluble, et
- une alimentation en eau chaude (25), et
ledit récipient et ladite alimentation étant configurés pour distribuer une dose d'ingrédient de boisson et d'eau dans la chambre de mélange de boisson.

11. Machine de préparation de boissons selon l'une quelconque des revendications précédentes, dans laquelle ladite machine comprend plusieurs unités de préparation de boissons (2).

12. Machine de préparation de boissons selon l'une quelconque des revendications 1 à 9, dans laquelle l'unité de préparation de boissons (2) est couplée à une machine de préparation de boissons secondaire (3), ladite machine secondaire distribuant des boissons chaudes et dans laquelle la conduite de distribution de boissons chaudes (31) de la machine secondaire débouche dans la chambre de mélange (21) de la machine de préparation de boissons.

13. Procédé de préparation de boissons froides à partir d'un ingrédient de boisson soluble et d'eau avec une machine de préparation de boissons selon l'une quelconque des revendications 1 à 12, comprenant les étapes consistant à :
- introduire une dose d'ingrédient de boisson soluble et d'eau chaude dans la chambre de mélange de boisson pour produire une boisson chaude, puis
- faire circuler la boisson chaude dans la boucle entre l'unité d'échangeur de chaleur et la chambre de mélange de boisson et simultanément faire circuler le liquide de refroidissement dans l'échangeur de chaleur jusqu'à ce que la boisson atteigne la température froide requise, puis
- éventuellement stocker la boisson froide dans le circuit de boisson, et
- distribuer la boisson froide, de préférence dans un réservoir.

14. Procédé selon la revendication précédente, dans lequel la machine comprend le moyen de circulation et le moyen de distribution formant un ensemble, ledit ensemble consistant en un trajet de liquide d'orientation sélective (4) au niveau de la sortie de boisson de l'unité d'échangeur de chaleur, ledit trajet étant conçu pour diriger la boisson soit vers la chambre de mélange de boisson (21), soit vers la sortie de distribution de boisson (29) en fonction de la vitesse de la boisson, ledit procédé comprenant les étapes consistant à :
- introduire une dose d'ingrédient de boisson soluble et d'eau chaude dans la chambre de mélange de boisson pour produire une boisson chaude, et faire tourner la roue de mélange à grande vitesse pour faire circuler la boisson chaude dans la boucle entre l'unité d'échangeur de chaleur et la chambre de mélange de boisson jusqu'à ce que la boisson atteigne la température froide requise, puis
- faire tourner la roue de mélange à une vitesse inférieure pour distribuer la boisson à travers la sortie de distribution de boisson.

15. Procédé de nettoyage d'une machine de préparation de boissons selon l'une quelconque des revendications 6 à 8, comprenant les étapes consistant à :
- introduire un liquide de nettoyage dans la chambre de mélange de boisson et faire tourner la roue de mélange à grande vitesse afin de faire circuler le liquide de nettoyage dans la boucle entre l'unité d'échangeur de chaleur et la chambre de mélange de boisson, puis
- faire tourner la roue de mélange à une vitesse inférieure afin d'évacuer la boisson à travers la sortie de distribution de boisson.
